Europäisches Patentamt

European Patent Office

Office européen des brevets

(11) Publication number: **0 410 507 A2**

# EUROPEAN PATENT APPLICATION

(21) Application number: **90201916.5**

(22) Date of filing: **16.07.90**

(51) Int. Cl.5: **A23D 9/00, A23D 7/00, A23G 1/00**

(30) Priority: **25.07.89 EP 89201947**

(43) Date of publication of application:
**30.01.91 Bulletin 91/05**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE**

Applicant: **UNILEVER PLC**
**Unilever House Blackfriars P.O. Box 68**
**London EC4P 4BQ(GB)**

(84) **GB**

(72) Inventor: **Talbot, Geoffrey**
**22 The Elms**
**Kempston, Beds(GB)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Aerated fat-continuous compositions.**

(57) The present invention relates to aerated edible fat-continuous compositions in which at least 50 % by weight of the continuous fat-phase consists of a blend of one or more polyol fatty acid polyesters. The invention provides compositions having improved aeratablity over conventional fat-based compositions and is particularly applicable to aerated solid confectionery products.

EP 0 410 507 A2

## AERATED FAT-CONTINUOUS COMPOSITIONS

The present invention relates to edible fat-continuous compositions, and more in particular to such compositions which are aerated.

In many fat-continuous food products, such as chocolate, spreads, and the like, it is often desirable to improve texture and organoleptic properties by aeration. Frequently however, aeration of such products requires a compromise between product characteristics and processing conditions.

Product characteristics, such as textural stability, appearance, hardness, and organoleptic properties, as also processing convenience, such as foam-stability, good mouldability and wrappability prove often not to be fully compatible. In particular, the melting and crystallization behaviour of the continuous fat-phase wherein the gas phase introduced during the aeration process, has to be stably dispersed, proves difficult to optimize to desired product characteristics without adverse effects upon processing simplicity.

It has now been found that a continuous fat-phase based upon polyol fatty acid polyesters allows both good aerated product characteristics and convenience of aerating and subsequent processing.

Polyol fatty acid polyesters have been suggested as fat-replacers in the general area of low-calorie food products, in particular to reduce the caloric content of the traditionally high-fat food products such as salad dressings, margarines, shortenings, and the like. Low-calorie food products comprising polyol fatty acid polyesters are disclosed in US 3,600,186.

In JP 62/205738 minor amounts of sucrose palmitate (0.5-3 % by weight of the fat phase) are suggested as crystal growth inhibitors in shortenings and chocolate compositions.

In US 3,093,481 polyol fatty acid polyesters such as sucrose octastearate and octapalmitate are suggested for inclusion into shortenings in amounts of upto 0.5 %. They are stated to have beneficial effects upon stability and consistency of the shortenings.

In US 2,886,438 chocolate mixes and shortenings comprising upto 5 % by weight of the fat of a fatty acid ester of an unsubstituted mono-alkyl-glucoside, such as ethylglucoside stearate are disclosed. The glucoside esters are stated to have beneficial effects upon consistency and appearance.

In EP 0 236 288 the suitability in food products of polyol fatty acid polyesters having a specific viscosity and solids/liquid stability at 37°C, is described. Among the many types of food applications also chocolates, chocolate confections, and fillings are mentioned.

EP 0 271 951 discloses cocoa-butter substitutes on the basis of sucrose fatty acid polyesters wherein the fatty acid radicals are derived from lauric-palmitic or capric-stearic sources.

EP 0 285 187 discloses cocoa-butter substitutes for chocolate compositions based upon sucrose fatty acid polyesters characterized by a clear melting point between 30 and 36°C and a SCI of over 66 at 6.6°C below the clear melting point.

In EP 0 290 420 there are disclosed shortening compositions comprising so-called intermediate melting sucrose fatty acid polyesters (specific viscosity and solids/liquid stability at 37°C and iodine values (IV) of between 25 and 55) in combination with small amounts of solid hardstock material of very low IV. Among the potential applications chocolate confections and fillings are mentioned.

In the art the application of polyol fatty acid polyesters to aerated edible fat-continuous compositions, such as aerated chocolate compositions, has not been disclosed or suggested.

It has now been found that if a substantial proportion of the fat component which e.g. in chocolate conventionally consists of cocoa-butter and/or cocoa-butter substituting fats, comprises polyol fatty acid polyesters, compositions are obtained which exhibit excellent aeratibility, in particular as regards foam stability and degree of aeration achievable. The improved stability of the liquid or molten product foam resulting immediately after the aeration process allows increased flexibility of subsequent processing to the final product shape and application to the full range of edible fat-continuous product forms.

Accordingly, the present invention provides aerated edible fat-continuous compositions in which at least 50 % by weight of the continuous fat-phase consists of a blend of one or more polyol fatty acid polyesters.

In this specification the term aeration refers to the incorporation of a gaseous phase into the edible fat-continuous composition resulting in a cellular structure, which may be visible or apparently invisible.

In general the degree of aeration is expressed as 'overrun', in this specification the latter being defined as:

$$\frac{\text{volume of aerated composition - volume of unaerated composition}}{\text{volume of unaerated composition}} \times 100$$

The aerated compositions according to the invention may have overruns of as low as 5 % to as high as 200 %, or even 300 % depending on the specific application intended. Only slightly modified textures, and in particular those without a clearly visible cellular structure, are achieved by overruns of from 10 to 50 %, and preferably of from 10 to 25 %. If a much more pronounced textural modification is aimed at, such as e.g. by the introduction of a clearly visible cellular structure, much higher overruns may be more appropriate, such as overruns in the range of 50 to 300 %, overruns of from 100 to 150 % being preferred.

The invention may be applied to a wide range of edible fat-continuous products the aeration of which result in improved characteristics. Such products particularly include chocolate and spread products.

The term 'chocolate' as used herein is intended to encompass the full conventional range of fat-continuous chocolate products such as molded or extruded chocolate bars and tablets, chocolate fillings, chocolate coatings, couvertures and chocolate spreads.

The term 'spread' as used herein is intended to encompass all fat-continuous, spreadable, and in general flavoured, products for use on sandwiches, biscuits and cakes, such as peanut butter, hazelnut spreads, as also water-in-oil emulsions intended for use as cream margarines.

The polyol fatty acid polyesters employed in the present invention are fatty acid polyesters derived from aliphatic compounds which comprise at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and $\alpha$-methylglucoside. The sucrose polyol is preferred most.

The degree of conversion to polyester, which is defined as the percentage of polyol hydroxyl groups that, on an average, have been esterified with fatty acids, should be over 70 %, and preferably is over 85 or even 95 %.

In general and preferably in view of low-calorie aspects, polyol fatty acid polyesters having the high degrees of conversion in accordance with the invention, are selected from indigestible polyesters. For the purposes of the invention by indigestibility is meant that at least about 70 % by weight of the material concerned is not digested by the human body.

Polyol fatty acid polyesters for use in the present invention can be suitably defined by way of their melting profiles. Such melting profiles are conveniently described by an N-line or N-values. The N-line is the graph of $N_t$-values versus the temperature t. The $N_t$-value is conveniently measured by the nuclear magnetic relaxation technique and is a direct measure of the level of solid fat content at temperature t. This method is suitably described in Fette, Seifen, Anstrichmittel $\underline{80(5)}$ , 180-186 (1978). To some extent the measurement of $N_t$-values is dependent on the temperature profile used to prepare the samples for the NMR-measurement. For the purposes of the present invention the following preparatory temperature profile is adopted: first 30 minutes at 60°C, followed by 90 minutes at 0°C, 40 hours at 26°C, again 90 minutes at 0°C and finally 60 minutes at the temperature of the measurement, after which the NMR measurement is carried out.

For organoleptic considerations, at 37°C the N-value of the polyol fatty acid polyester should be relatively low, in particular below about 10 and preferably between 0 and 5.

The required melting behaviour below body temperature strongly depends upon the intended application and type of fat-continuous composition. For the purposes of the invention a suitable point of reference is the solids level at the temperature of normal storage.

For solid products, such as in particular chocolate bars and solid confectionery coatings and couvertures, typical $N_{storage}$-values are over 50, and $N_{storage}$-values of 60 to 95, and in especially of 70 to 90 being preferred.

For products of more fluid rheology or where the rheology is largely determined by non-fat solids, such as chocolate spreads and peanut-butter, much lower $N_{storage}$-values are appropriate, in particular $N_{storage}$-values of from 0 to 15, $N_{storage}$-values of 0 to 5 being preferred.

Normal storage temperatures are dependent upon application and may vary from territory to territory. For the purposes of the present invention it has been found convenient to take the normal storage temperature for compositions intended for non-frozen applications to be 20°C, for chilled applications to be 5°C and for frozen applications to be -20°C.

In general fatty acids per se, lower alkylesters thereof or naturally occurring fats and oils may be used as source for the polyester fatty acids. Conventional techniques may be used to introduce the required fatty acid composition and degree of saturation. Suitable such techniques include full or partial hydrogenation, interesterification and fractionation, and may be used before or after conversion of the polyols to the corresponding polyol fatty acid polyesters.

Sources of suitable polyester fatty acids blends are vegetable oils, in particular soybean, sunflower, safflower, cottonseed, palm and lauric oils, such as coconut and palm kernel oils. Such oils may be partially or fully hydrogenated, and in optimising to specific product specifications the use of mixtures of, optionally partially or fully hydrogenated oils may be of special advantage, such as e.g. fully hydrogenated palm and palm kernel oils or mixtures thereof.

Instead of a 'single' polyol fatty acid polyester, i.e. a polyester which is synthesized from a polyol and a source for the fatty acid residues in a single reaction, also a mixture of polyol fatty acid polyesters may be used provided the overall solids profile of the final blend is in accordance with the present invention.

In this specification the term 'blend' is intended to encompass both a single polyol fatty acid polyester and a mixture of more than one polyol fatty acid polyesters.

The continuous fat-phase of the composition in accordance with the present invention may consist solely of the blend of one or more polyol fatty acid polyesters, but it may also comprise amounts of milk fats or vegetable oils, in particular flavour-introducing oils, such as natural cocoa-butter and nut oils, such as hazelnut and peanut oils, provided such mixing does not result in a fat phase having a solids versus temperature profile outside the range as indicated hereinbefore for the blend of polyesters. If a mixture is considered desirable, the amount of polyester should be 50 to 100 % by weight of continuous fat-phase of the composition. To take full advantage of the invention as well as the low-calorie aspect, the continuous fat-phase preferably consists of 75 to 100 %, and most preferably of 80 to 95 %, of the blend of one or more polyol fatty acid polyesters.

In general the aerated compositions comprise from 20 to 90 % by weight of the continuous fat-phase, and for most product applications preferably comprises from 30 to 60 % by weight. Most preferably, solid chocolate products and chocolate spreads comprise 30 to 40 % by weight of the continuous fat-phase, whereas peanut-butter and chocolate fillings-comprise 40 to 60, or even 50 to 60 % by weight thereof.

The aerated fat-continuous compositions in accordance with the present invention may comprise in addition to the fat component one or more ingredients conventionally used in spreads, confectionery and chocolate product manufacture, such as sugar, water, suitable flavouring, in particular cocoa powder, chocolate liquor or cocoa mass, nut or fruit flavourings, alcohol-based confection materials, milk solids in the form of skimmed or full milk powder, emulsifier, such as in particular lecithin, anti-oxidants, (dietary) fibres, and vitamins, such as vitamin E.

In chocolate compositions, preferably defatted sources of cocoa flavouring are used in amounts of 5 to 30 % by weight of the product, as also de-fatted sources of milk solids, such as in particular skimmed milk powder in amounts of 5 to 25 % by weight of the product.

Suitable sugars include the common sugars, such as sucrose and raffinose, included in amounts of from 10 to 60 %, in particular of from 30 to 50 % by weight of the filling composition. These conventional sugars may also be replaced by dietetic sweeteners such as sorbitol, fructose, xylitol and lactitol which provide compositions particularly suitable to avoid tooth decay or in diabetic diets. Such dietetic sweeteners are included in similar amounts as conventional sugars, i.e. in amounts of 30 to 55 % by weight of the final composition. Inclusion of sorbitol and xylitol have the further advantage to increase the cool-melting sensation of the aerated compositions.

It may be of particular advantage to use a low-calorie high-intensity sweetener in combination with the indigestible polyol fatty acid polyesters of the invention to provide aerated compositions having an even further reduced caloric content. Suitable such high-intensity sweeteners include aspartame (phenylalanin), saccharin, cyclamate, sucralose, acesulfame-K, thaumatin and mixtures thereof. They are normally included in amounts of from 0.1 to 5 % by weight of the product. If so desired, the high-intensity sweeteners may also be used to top up reduced amounts of the common sugars or dietetic sweeteners. High-intensity sweeteners are generally supplemented to the amount of sweeteners they replace, by suitable low-calorie bulking agents, such as polydextrose.

Aeration of the fat-continuous composition may be achieved by conventional methods, which include gas-dispersion by whipping and dissolved gas-expansion after pressure release. Any of the conventional types of equipment used in the food industry to incorporate gasses, such as carbon dioxide, nitrogen or air, in liquid or molten compositions may be used.

The invention is now further illustrated by way of example.

4

EXAMPLE 1

In a comparative experiment aeration properties (maximum overrun, i.e. the maximally achievable overrun under the conditions applied) were compared of a conventional chocolate fat and three sucrose fatty acid polyester based fats. Overruns were measured at a range of solids levels (10 to about 30 %) to investigate the processing flexibility.

Aeration experiments were carried out using a mini Mondomix® Continuous Aeration Machine type UA-05 of Mondomix Holland bv, the Netherlands. The Mondomix® system consists of a pen mixer, an external heat-exchange unit, gas and product in- and outlets and a back-pressure regulator. Normal air was used as aeration gas, aeration conditions being: 3 bar back-pressure, 240 rpm mixing speed and about 12 litres/hour product flow.

The results of Table 1 clearly show the very good aeratabilities of the sucrose fatty acid polyesters as also their relatively low sensitivities to variations in solids level thereby providing improved processing convenience and product flexibility over triglyceride fats.

TABLE 1

| fat | solids level (%) | maximum overrun (%) |
|---|---|---|
| triglyceride fat 1 [a)] | 21.0 | 178 |
| triglyceride fat 1 | 10.9 | 38 |
| triglyceride fat 2 [b)] | 13.7 | 229 |
| triglyceride fat 2 | 9.9 | 31 |
| triglyceride fat 3 [c)] | 16.3 | 83 |
| triglyceride fat 3 | 10.2 | 57 |
| SPE 1 [d)] | 14.5 | 212 |
| SPE 1 | 10.1 | 229 |
| SPE 2 [e)] | 25.2 | 283 |
| SPE 2 | 9.2 | 219 |
| SPE 3 [f)] | 30.3 | 265 |

(a) non-tempered hydrogenated and fractionated blend of soybean oil and palm oil having N-values of 84 at 20°C, 55 at 30°C and < 2 at 37°C

(b) interesterified blend of palm oil and palm kernel oil having N-values of 29 at 20°C, 3 at 30°C and 0 at 37°C

(c) mid-fractionated palm oil + 1 % of lecithin having N-values of 88 at 20°C, 38 at 30°C and < 2 at 37°C

(d) sucrose fatty acid polyester derived from a partially hardened palm oil (slip melting point 44°C), the polyester having a degree of conversion of over 95 % and N-values of 53 at 20°C, 18 at 30°C and < 2 at 37°C.

(e) sucrose fatty acid polyester derived from a blend of 75 % of fully hardened palm kernel oil and 25 % of fully hardened palm oil, the polyester having a degree of conversion of over 95 %, and N-values of 84 at 20°C, 50 at 30°C, at 37°C.

(f) sucrose fatty acid polyester derived from a blend of 62 % of fully hardened palm kernel oil and 38 % of fully hardened palm oil, the polyester having a degree of conversion of over 95 %, and N-values of 80 at 20°C, 34 at 30°C, at 37°C.

EXAMPLE 2

A solid chocolate product, was prepared having the following composition:

| ingredients | % by weight |
|---|---|
| sugar | 42.8 |
| skimmed milk powder | 8.6 |
| cocoa powder (10-12 % fat) | 8.6 |
| SPE 3 (**) | 39.6 |
| lecithin | 0.4 |

The chocolate product was prepared by conventional processing and aerated to 110 % overrun using a processing temperature of 30° C, a back-pressure of 3 bar and a product flow-rate of about 10 litres/hour.

## Claims

1. An aerated edible fat-continuous composition characterised in that at least 50 % by weight of the continuous fat-phase consists of a blend of one or more polyol fatty acid polyesters.

2. Composition according to claims 1 having an overrun of from 50 to 300%.

3. Composition according to claim 2 having an overrun of 100 to 150%.

4. Composition according to any one of the preceding claims in which the blend of one or more polyol fatty acid polyesters has an $N_{37}$ of 10 or less.

5. Composition according to claim 4 in which the blend of one or more polyesters has an $N_{37}$ of between 0 and 5.

6. Composition according to any one of the preceding claims in which the fat phase comprises 75 to 100 % of polyol fatty acid polyesters.

7. Composition according to any one of the preceding claims comprising of from 30 to 60 % by weight of fat phase.

8. Solid confectionery composition according to any one of the preceding claims.

9. Composition according to claim 8 comprising:

(a) 5 to 30 % by weight of a de-fatted source of cocoa,

(b) 5 to 25 % by weight of de-fatted sources of milk solids, and

(c) 10 to 60 % of sugar.

10. Composition according to claim 9 having a $N_{storage}$-value of 60 to 95.